# FASCICULE DE BREVET EUROPEEN

(11) **EP 0 657 493 B1**
(45) Date de publication et mention de la délivrance du brevet: **23.08.2000**
(21) Numéro de dépôt: 94203423.2
(22) Date de dépôt: 24.11.1994
(51) Int. Cl.: C08J 7/12, B29C 49/46

(54) **Procédé pour la fabrication d'un article comprenant une étape de traitement superficiel en l'absence substantielle d'oxygène**
Verfahren zur Herstellung eines Formkörpers umfassend eine Oberflächenbehandlungsstufe in Abwesenheit von Sauerstoff
Process for the production of an article comprising a step of surface treatment in the substantial absence of oxygen

(30) Priorité: 02.12.1993 BE 9301331; 21.03.1994 BE 9400303
(43) Date de publication de la demande: 14.06.1995
(73) Titulaire: SOLVAY (Société Anonyme), 1050 Bruxelles (BE)
(72) Inventeur: Wouters, Paul, B-1800 Vilvoorde (BE); Van Schaftingen, Jules-Joseph, B-1300 Wavre (BE); Dugois, Philippe, B-1060 Bruxelles (BE); Obsomer, Marc, B-1060 Bruxelles (BE)
(74) Mandataire: Decamps, Alain René François

(56) Documents cités:
- EP-A- 0 270 776
- DE-A- 1 520 915
- GB-A- 2 001 656
- US-A- 4 264 750
- US-A- 4 422 991
- JOURNAL OF POLYMER SCIENCE, POLYMER CHEMISTRY EDITION, vol.13, no.4, 1975, NEW YORK US pages 857 - 890 D.T. CLARK ET AL. 'APPLICATIONS OF ESCA TO POLYMER CHEMISTRY. PART VI. SURFACE FLUORINATION OF POLYETHYLENE.'

## Description

La présente invention concerne un procédé pour la fabrication d'un article imperméable en particulier aux carburants comprenant une étape de traitement superficiel d'au moins une partie de l'article en l'absence substantielle d'oxygène.

Il est bien connu d'utiliser des métaux comme matériaux pour la fabrication d'articles imperméables, en particulier d'articles imperméables aux carburants, tels que des tuyaux, films ou récipients. Aujourd'hui, les matières plastiques présentent de nombreux avantages par rapport aux matériaux métalliques, notamment leur meilleure résistance à la corrosion et à l'impact, leur faible poids, la possibilité de leur donner des formes très variées, etc. La plupart des matières plastiques courantes, et en particulier les polyoléfines, présentent cependant l'inconvénient de ne pas être totalement imperméables à certaines substances organiques, et notamment à certains constituants présents dans les carburants liquides. En raison de cet inconvénient ainsi que des réglementations de plus en plus strictes concernant notamment les réservoirs à carburant pour véhicules, il est essentiel de disposer de matières plastiques qui, tout en restant peu coûteuses à produire, permettent une imperméabilité élevée aux carburants.

Il a déjà été proposé de réaliser des articles multicouches, comprenant au moins une couche d'une matière plastique présentant une bonne imperméabilité aux carburants, par exemple un polyamide, ainsi qu'au moins une couche d'une matière plastique courante, telle qu'une polyoléfine, destinée à assurer la rigidité mécanique de ces articles. La mise en oeuvre d'une telle solution est cependant complexe et coûteuse.

Une autre proposition de solution, décrite notamment dans le document EP 500166, consiste à faire subir à au moins une partie des articles à imperméabiliser un traitement superficiel, par exemple un traitement de fluoration ou de sulfonation. Cette technique conduit à une augmentation importante de l'imperméabilité des polyoléfines aux hydrocarbures, mais le niveau de celle-ci n'est pas toujours suffisant, en particulier dans le cas d'articles en polyoléfines que l'on désire rendre suffisamment imperméables vis-à-vis de carburants mixtes comprenant des constituants oxygénés tels que du méthanol.

En outre, il est clair que les solutions retenues ne doivent pas nuire aux exigences relatives à la mise en oeuvre des matières plastiques. Ainsi, à titre d'exemple, les polyoléfines utilisées pour réaliser par extrusion-soufflage des corps creux tels que des réservoirs à carburant doivent de préférence présenter une bonne stabilité thermique ainsi qu'une viscosité, une tenue au fondu et une étirabilité adéquates.

D'autres exigences sont liées à certaines utilisations spécifiques des articles; ainsi, par exemple, certaines nonnes relatives à l'imperméabilité des réservoirs à carburant en matière plastique doivent être remplies non seulement juste après leur fabrication, mais également après une utilisation de longue durée. En effet, les sollicitations thermiques et mécaniques liées à une utilisation réelle, telles que le déplacement du liquide en contact avec l'article, peuvent réduire progressivement l'imperméabilité des articles aux carburants. Une méthode particulièrement sévère d'évaluer la résistance de réservoirs à carburant à de telles sollicitations thermiques et mécaniques est de réaliser un test qualifié de "slosh test" tel que décrit par la suite. Après ce test, l'imperméabilité aux carburants de certains réservoirs en polyéthylène est réduite d'un facteur pouvant dépasser 10.

La présente invention a dès lors pour objet de permettre la fabrication d'articles présentant une imperméabilité en particulier aux carburants élevée, stable dans le temps et peu affectée par les sollicitations thermiques et mécaniques. En particulier, l'invention vise à rendre possible la fabrication de réservoirs à carburant satisfaisant au "slosh test" susmentionné.

L'invention concerne un procédé pour la fabrication d'un article comprenant une étape de traitement superficiel d'au moins une partie de l'article en l'absence substantielle d'oxygène, qui se caractérise en ce que la couche de surface de l'article devant être traitée est constituée d'un matériau qui comprend au moins une polyoléfine et qui comprend moins de 5 mg d'oxygène par kg, indépendamment de l'oxygène éventuellement contenu dans les éventuels additifs incorporés à ce matériau.

Les articles concernés peuvent être de tout type, par exemple des films, plaques, corps creux, tuyaux. L'invention est intéressante dans le cas de corps creux. Elle est tout particulièrement intéressante dans le cas de réservoirs à carburant. Les matériaux constitutifs des articles ou parties d'articles concernés comprennent au moins une polyoléfine telle que définie ci-après. Ils peuvent éventuellement comprendre plusieurs de ces polyoléfines. De préférence, ils sont essentiellement constitués d'une seule polyoléfine. Selon la destination ou le fonctionnement d'un article donné, par exemple en fonction de la position des zones de contact entre les carburants et l'article, on peut notamment choisir de n'en réaliser qu'une ou certaines parties à partir d'un matériau répondant à la définition donnée ci-dessus puis de ne traiter superficiellement que cette partie de l'article. On peut par exemple fabriquer un article dont la couche de surface destinée à être traitée selon l'invention est constituée d'un matériau qui comprend au moins une polyoléfine. On peut ainsi fabriquer par coextrusion un article bicouche dont la couche intérieure est constituée d'un tel matériau qui comprend au moins une polyoléfine et est traitée superficiellement, et dont une autre couche comprend une ou plusieurs matières plastiques différentes ainsi qu'éventuellement un ou plusieurs additifs. Dans le cas de corps creux multicouches, on préfère qu'au moins leur couche intérieure soit essentiellement constituée d'un matériau comprenant une polyoléfine et comprenne moins de 5 mg d'oxygène par kg, indépendamment de l'oxygène éventuellement contenu dans les éventuels additifs incorporés à ce matériau.

Le matériau qui comprend au moins une polyoléfine est le plus souvent constitué essentiellement de polyoléfine. Par polyoléfine, on entend désigner tout homopolymère ou copolymère d'oléfines ainsi que tout copolymère comprenant au moins 70 % de monomères oléfiniques ou leurs mélanges. Par oléfines, on entend aussi bien désigner les α-oléfines telles que l'éthylène, le propylène, l'hexène ou le butène que les oléfines comportant plus d'une double liaison, par exemple les dioléfines telles que le butadiène. On préfère utiliser comme polyoléfine du polyéthylène, ce terme désignant tout polymère de l'éthylène comprenant éventuellement, outre de l'éthylène, moins de 10 % (en poids) d'autres comonomères tels que par exemple le butène et/ou l'hexène. De manière particulièrement préférée, on utilise comme polyoléfine du polyéthylène de haute densité, dont la masse volumique est généralement comprise entre 935 et 965 kg/m³ à 23 °C (ISO R1183).

Le matériau peut en outre comprendre certains additifs connus tels que des charges, pigments, anti-oxydants, anti-UV, lubrifiants, fibres de renforcement, ignifugeants. Avantageusement, ces additifs ne sont pas des polymères. Il est préférable que le matériau contienne aussi peu d'additifs que possible, de préférence moins de 0,2 % en poids. On accepte toutefois la présence d'antioxydants notamment phénoliques, organophosphorés ou organosulfurés, en des quantités ne dépassant de préférence pas 0,1 % en poids.

La teneur en oxygène du matériau comprenant la polyoléfine utilisée est de préférence inférieure à 3 mg d'oxygène par kg. De manière particulièrement préférée, elle est inférieure à 1 mg d'oxygène par kg.

Comme exposé ci-dessus, la teneur maximale en oxygène du matériau ne concerne pas l'oxygène éventuellement présent dans le ou les additifs que l'on incorpore éventuellement au matériau. On vise en fait à limiter la quantité d'oxygène dont la présence est accidentelle, par exemple de l'oxygène emprisonné entre les granules de polyoléfine au cours de la fabrication de l'article, de l'oxygène dissous dans le matériau, ou encore de l'oxygène qui se serait lié chimiquement à la polyoléfine par oxydation lors de sa mise en oeuvre. Par contre, l'oxygène indirectement présent dans le matériau suite à l'incorporation volontaire d'additifs en contenant ne doit pas être pris en compte pour le respect des teneurs maximales citées.

Par traitement superficiel, on entend désigner tout traitement de surface connu en vue d'accroître l'imperméabilité. On est particulièrement intéressé ici par les traitements superficiels permettant d'accroître l'imperméabilité de réservoirs vis-à-vis des carburants. On peut recourir avantageusement à la sulfonation ou à la fluoration. D'excellents résultats ont été obtenus par un traitement de fluoration.

Ce traitement superficiel peut notamment consister à exposer l'article en tout ou partie, pendant une durée qui est généralement de l'ordre de quelques secondes à plusieurs heures à l'action d'un mélange gazeux comprenant un gaz réactif et un gaz inerte tel que de l'azote.

Par "absence substantielle d'oxygène", on entend signifier que la teneur en oxygène dans le gaz auquel est éventuellement exposée la polyoléfine doit être très faible, c'est-à-dire inférieure à 100 ppm en volume, et de préférence inférieure à 10 ppm en volume.

Le procédé de fabrication peut également comprendre, outre l'étape de traitement superficiel susmentionnée, une étape préalable de mise en oeuvre de l'article.

Par étape de mise en oeuvre, on entend désigner toute technique connue utilisable pour la transformation de matières thermoplastiques, permettant de donner naissance à un article. A titre d'exemples non limitatifs d'étape de mise en oeuvre, on peut par exemple citer l'injection, l'extrusion, l'extrusion-soufflage, le calandrage, etc. On préfère réaliser comme étape préalable de mise en oeuvre une étape d'extrusion-soufflage, notamment dans le cas de corps creux.

Le procédé selon l'invention n'exclut pas que le matériau ait compris, à un stade quelconque de l'étape de mise en oeuvre, une quantité d'oxygène supérieure à 5 mg/kg, pour autant que la teneur en oxygène soit redevenue inférieure à cette valeur avant l'étape de traitement superficiel.

Néanmoins, on préfère que le matériau mis en oeuvre ait toujours compris moins de 5 mg d'oxygène par kg. On préfère également éviter que la teneur en oxygène du matériau n'augmente sensiblement durant l'étape de mise en oeuvre. En effet, pendant et immédiatement après la mise en oeuvre du matériau, celui-ci se trouve à une température élevée, et est donc particulièrement sensible à la présence d'oxygène qui se fixerait chimiquement ou se solubiliserait davantage, ce qui risquerait d'imposer une étape supplémentaire avant traitement superficiel afin de réduire la teneur en oxygène du matériau à la valeur requise selon l'invention.

Dès lors, l'étape de mise en oeuvre est très avantageusement réalisée en l'absence substantielle d'oxygène, en ce qui concerne au moins la partie de l'article destinée à être traitée superficiellement. On peut par exemple pour ce faire travailler sous vide ou sous atmosphère inerte. Par atmosphère inerte, on entend désigner une atmosphère constituée d'un ou plusieurs gaz inertes tel que par exemple l'azote.

Le cas de l'extrusion-soufflage est particulièrement délicat, vu qu'après être sortie de l'extrudeuse, alors qu'elle se trouve encore à une température élevée, la paraison extrudée est susceptible de séjourner pendant un temps relativement long, pouvant varier de quelques secondes à quelques minutes, suspendue sous la tête de l'extrudeuse. Il est donc indispensable de réduire au mieux tout risque de contact entre la paraison (ou au moins sa partie destinée à être traitée superficiellement) et l'air ambiant, entre la sortie de la paraison de l'extrudeuse et la fermeture du moule. Dans le cas où les articles fabriqués sont de petite taille, on peut envisager de placer l'ensemble de l'appareillage de mise en oeuvre dans une enceinte sous vide ou sous atmosphère inerte. Cette solution s'applique cependant difficilement dans un environnement industriel, et particulièrement dans le cas d'appareillages d'extrusion-soufflage destinés à la fabrication de réservoirs à carburant, qui sont généralement de grandes dimensions.

L'injection pose peu de problèmes : il est facile de remplir le moule d'un gaz inerte avant le début de l'injection, de façon à en chasser l'air.

Dans les cas où on fabrique par extrusion ou extrusion-soufflage un article dont au moins la paroi intérieure est constituée d'un matériau comprenant une polyoléfine et comprenant moins de 5 mg d'oxygène par kg, une solution consiste à diluer et remplacer au maximum l'air présent à l'intérieur de la cavité de l'article en cours d'extrusion au moyen d'un courant de gaz inerte injecté au centre de la paraison, par exemple au moyen d'un orifice aménagé dans la zone centrale de la tête d'extrusion et raccordé à une source de gaz inerte. Le débit de gaz inerte est habituellement réglé de manière à ce que la teneur en oxygène à l'intérieur de la cavité de l'article en cours d'extrusion soit inférieure à 100 ppm en volume, et de préférence inférieure à 10 ppm en volume. Afin de réduire la consommation en gaz inerte, on peut avantageusement obturer, au moins partiellement, l'extrémité de l'article en cours d'extrusion. Dans le cas de l'extrusion, on peut notamment disposer un bouchon à son extrémité, ledit bouchon comportant éventuellement un petit orifice de manière à permettre que le gaz inerte injecté au niveau de la tête d'extrusion expulse ainsi progressivement les traces d'air emprisonné à l'intérieur de la cavité de l'article en cours d'extrusion. Au lieu d'utiliser comme bouchon une pièce spécialement conçue à cet effet, on peut également pincer l'extrémité de l'article extrudé de manière à en sceller hermétiquement ou quasi-hermétiquement l'extrémité, ce qui conduit au même résultat. Il faut bien entendu veiller à soigneusement contrôler la pression du gaz inerte injecté dans l'article, afin d'éviter qu'une surpression ou sous-pression interne ne provoque une déformation de l'article en cours de fabrication. La technique du scellage est particulièrement avantageuse dans le cas de l'extrusion-soufflage, où la technique du bouchon est peu efficace et peu pratique en raison du caractère discontinu du procédé. Par cette technique, il est possible d'atteindre une teneur en oxygène dans la cavité de l'article inférieure ou égale à 2 ppm en volume.

Dans le cas de l'extrusion-soufflage, une élimination encore plus importante de l'oxygène résiduel qui aurait été emprisonné à l'intérieur de la cavité de la paraison après la fermeture du moule peut être obtenue en procédant à plusieurs injections de gaz de soufflage, séparées par des détentes au moins partielles, de sorte à diluer l'oxygène emprisonné.

Selon un mode de réalisation particulièrement avantageux du procédé de fabrication, l'étape de mise en oeuvre est réalisée en l'absence substantielle d'oxygène.

Il est en outre avantageux que les étapes du procédé de fabrication soient au mieux intégrées à la suite l'une de l'autre, afin de réduire notamment les pertes de temps et les risques de reprise d'oxygène par le matériau entre lesdites étapes. Il est notamment intéressant que l'étape de mise en oeuvre soit immédiatement suivie par l'étape de traitement superficiel. Dans le cas particulier de mise en oeuvre par extrusion-soufflage, il peut s'avérer très intéressant de réaliser le traitement superficiel immédiatement après le soufflage, en injectant par exemple le gaz de traitement superficiel dans le moule de soufflage.

Avant la mise en oeuvre et le traitement superficiel de l'article, le procédé de fabrication peut en outre comprendre une étape de conditionnement du matériau comprenant la polyoléfine. Par "étape de conditionnement", on entend désigner toute étape intervenant entre le moment où la polyoléfine sort du réacteur de synthèse (de polymérisation) et celui où le matériau la contenant sera mis en oeuvre.

A titre d'exemples non limitatifs, l'étape de conditionnement peut comprendre un ou plusieurs des traitements suivants : transport, entreposage, compactage, granulation, alimentation de la machine de mise en oeuvre.

Le procédé selon l'invention n'exclut pas que le matériau ait compris, à un stade quelconque de l'étape de conditionnement, une quantité d'oxygène supérieure à 5 mg/kg, pour autant que la teneur en oxygène soit redevenue inférieure à cette valeur avant l'étape de traitement superficiel et, comme mentionné ci-dessus, de préférence même avant l'étape de mise en oeuvre.

Néanmoins, on préfère éviter que la teneur en oxygène du matériau n'augmente sensiblement durant l'étape de conditionnement, ce qui risquerait d'imposer une étape supplémentaire avant traitement superficiel afin de réduire la teneur en oxygène du matériau à la valeur requise selon l'invention. A titre d'illustration, le simple fait d'alimenter sans précautions particulières une extrudeuse par du polyéthylène en poudre ou en granules entraîne dans la zone d'entrée de l'extrudeuse une importante quantité d'air, de sorte que la teneur en oxygène régnant dans la zone d'entrée de l'extrudeuse (dans le matériau) est couramment de l'ordre de 300 mg/kg.

Dès lors, l'étape de conditionnement est autant que possible réalisée en l'absence substantielle d'oxygène. On peut par exemple pour ce faire travailler sous vide ou sous atmosphère inerte.

En ce qui concerne le transport, on peut notamment maintenir le fluff (c'est-à-dire la poudre de polymère sortant du réacteur de polymérisation) sous vide ou sous atmosphère inerte dès sa sortie du réacteur de polymérisation. On peut par exemple utiliser un système de transport maintenu sous vide ou sous atmosphère inerte. Par système de transport, on entend désigner tout dispositif usuel de manutention de poudres ou de granules, tel que vis d'Archimède, tapis roulant. Afin d'empêcher au mieux la pénétration d'oxygène dans ce dispositif, il est préférable qu'il soit le plus hermétique possible à l'air.

En ce qui concerne l'entreposage, on peut notamment garder la polyoléfine dans des emballages hermétiques, en particulier dans des emballages sous vide ou contenant un gaz inerte.

S'il se révèle difficile, pour des raisons matérielles ou autres, de réaliser en l'absence substantielle d'oxygène l'étape de conditionnement décrite ci-dessus, il est avantageux voire parfois nécessaire d'ajouter une étape dont le but principal est de réduire la teneur en oxygène du matériau avant sa mise en oeuvre. Pour ce faire, on soumet le matériau à une atmosphère inerte ou - de préférence - au vide, à une température inférieure à sa température de fusion Tf, de préférence de Tf -10 °C à la température ambiante. Ce traitement supplémentaire dure avantageusement au moins 10 secondes, de préférence au moins 1 heure. Dans le cas particulier du polyéthylène, la température est de préférence de l'ordre de 20 à 100 °C et la durée est de préférence de l'ordre de 15 secondes à 2 heures.

Si on redoute la mise en contact du matériau avec l'air, il est également avantageux de le saturer en gaz inerte, par exemple en l'exposant à au moins un gaz inerte sous une pression légèrement supérieure à la pression atmosphérique, à une température de Tf -10 °C à la température ambiante et pendant une durée d'au moins une minute. Ceci permet de réduire sensiblement la reprise d'oxygène par le matériau, même si il est ensuite accidentellement exposé au contact de l'air.

Les recherches conduites par la demanderesse ont montré que les matériaux comprenant des polyoléfines, par exemple du polyéthylène, utilisés jusqu'ici pour la fabrication d'articles traités superficiellement devant être imperméables en particulier aux carburants, possèdent une teneur non négligeable en oxygène, qui peut notamment être emprisonné dans des micro-cavités, dissous dans la matière plastique elle-même ou chimiquement lié à celle-ci (oxydation). La demanderese a constaté, sans parvenir à l'expliquer, qu'une présence excessive d'oxygène dans un matériau lors de l'étape de traitement superficiel conduit de manière surprenante à une dégradation rapide de l'imperméabilité des articles finis comprenant ce matériau et traités superficiellement lorsqu'ils sont soumis à des sollicitations thermiques et mécaniques importantes, telles que celles définies précédemment (cf. "slosh test").

La demanderesse a par contre constaté que l'utilisation, conformément à l'invention, d'un matériau pauvre en oxygène lors de l'étape de traitement superficiel adéquat, a un effet synergique qui conduit à des niveaux d'imperméabilité très élevés, en particulier aux carburants, stables dans le temps et peu affectés par les sollicitations thermiques et mécaniques.

L'invention concerne dès lors également l'utilisation d'un matériau comprenant au moins une polyoléfine et comprenant moins de 5 mg d'oxygène par kg, indépendamment de l'oxygène éventuellement contenu dans les éventuels additifs incorporés à ce matériau, pour la fabrication d'un article dont au moins une partie de la couche de surface est destinée à être traitée en l'absence substantielle d'oxygène.

Un autre aspect de l'invention concerne un article dont au moins une partie est destinée à être traitée superficiellement en l'absence substantielle d'oxygène qui se caractérise en ce que la couche de surface devant être traitée est constituée d'un matériau qui comprend au moins une polyoléfine et comprend moins de 5 mg d'oxygène par kg, indépendamment de l'oxygène éventuellement contenu dans les éventuels additifs incorporés à ce matériau.

Enfin, l'invention concerne un réservoir à carburant essentiellement constitué de polyéthylène de haute densité ayant subi un traitement superficiel de fluoration qui se caractérise par une perméabilité après "slosh test" ne dépassant pas 0,2 gramme CARB, de préférence inférieure à 0,1 gramme CARB. La perméabilité est mesurée selon la procédure SHED définie par le Californian Air Resource Board (CARB) dans "Technical support document for a proposal to amend regulations regarding evaporative emission standards, test procedures and durability requirements applicable to passengers cars, light-duty trucks, medium-duty vehicles and heavy-duty vehicles" en date du 9 août 1990.

### Exemples

Les exemples 1R, 2R et 3R sont donnés à titre de comparaison. L'exemple 4 illustre l'invention, de façon non limitative.

On a réalisé par extrusion-soufflage des réservoirs à carburant essentiellement constitués de polyéthylène de haute densité (PEHD) d'un volume interne de 0.075 m³ et d'une épaisseur moyenne de 4.5 mm. Le PEHD utilisé était du type PEHD PHILLIPS de densité 0,946 se présentant sous forme d'une poudre compactée, d'un indice de fluidité de 5.7 g/10 min (mesuré selon la norme ASTM D 1238) sous une charge de 212 N et à 190 °C. Ce PEHD a été polymérisé de manière classique et sans procéder à son conditionnement sous vide ou sous atmosphère inerte dès sa sortie du réacteur. On lui avait ajouté 1 g/kg de l'antioxydant Irganox® 1076.

L'extrusion de ce matériau a été réalisée de manière classique en vue de la fabrication de réservoirs à carburant, dans une tête d'extrusion continue constituée d'une monovis à fourreau rainuré, la paraison étant formée en un temps de cycle de 150 secondes et la température de sortie de tête étant d'environ 200 °C.

4 essais ont été réalisés, dans lesquels on a appliqué une ou plusieurs des étapes suivantes, comme indiqué dans le tableau figurant ci-dessous :
(A) Avant extrusion-soufflage, le matériau a été conditionné sous vide à 80 °C pendant 2 heures, puis saturé à l'azote à 80 °C sous 1,05 bar durant 15 minutes, puis placé dans un conteneur hermétique sous atmosphère d'azote à 20 °C sous 1,05 bar.
(B) La trémie d'alimentation de l'extrudeuse a été maintenue sous balayage d'azote.
(C) L'extrémité inférieure de la paraison a été scellée et la paraison gonflée à l'azote, sous une pression de 1,05 bar. La teneur en oxygène à l'intérieur de la cavité de la paraison était de 2 ppm en volume.
(D) Le soufflage de la paraison comprenait les étapes suivantes :
   - un soufflage proprement dit, comprenant 4 cycles d'injection durant 6 secondes chacun et de détente durant 4 secondes chacun, au moyen d'azote, sous une pression maximale de 12 bars;
   - une phase de fluoration en ligne, comprenant 3 cycles d'injection (6 s) et de détente (4 s) au moyen d'un mélange gazeux contenant 2 % de fluor et 98 % d'azote en volume, sous une pression maximale de 10 bars; la consommation de fluor étant d'environ 30 g par réservoir;
   - un rinçage du réservoir à l'azote (4 cycles d'injection (5 s) et de détente (5 s)).

Dans chacun des 4 essais, on a mesuré selon la procédure CARB la perméabilité au carburant avant et après application du "slosh test"; ces valeurs figurent dans le tableau ci-dessous exprimées en gramme CARB. Le carburant utilisé était une essence CEC RF-08-A-85. On a également mesuré la teneur en oxygène dans le matériau (compte non tenu de l'antioxydant) avant l'étape de fluoration et la teneur maximale en oxygène dans la cavité de la paraison durant l'étape de mise en oeuvre.

**TABLEAU**

| Essai | Etapes | | | | Perméabilité | | Teneur en O₂ dans le matériau avant fluoration | Teneur max. en O₂ dans la cavité de la paraison durant la mise en oeuvre |
|---|---|---|---|---|---|---|---|---|
| | A | B | C | D | avant "slosh test" | après "slosh test" | | |
| 1R | non | non | non | oui | < 0.1 | > 1 | ≥ 20 mg/kg | ≤ 500 ppm |
| 2R | oui | oui | non | oui | < 0.05 | 0.7 | ≥ 10 mg/kg | ≤ 500 ppm |
| 3R | non | oui | oui | oui | < 0.05 | 0.5 | ≈ 10 mg/kg | ≤ 2 ppm |
| 4 | oui | oui | oui | oui | < 0.03 | < 0.1 | < 1 mg/kg | ≤ 2 ppm |

Le "slosh test" utilisé comprend les étapes suivantes :
- remplissage du réservoir à 40 % de sa capacité et fermeture étanche de tous ses orifices, à l'exception d'un orifice utilisé pour la mise à la pression atmosphérique;
- stockage pendant 20 semaines à 40 ± 2 °C, l'intérieur du réservoir se trouvant à la pression atmosphérique à travers un canister;
- fixation du réservoir sur un châssis oscillant tel que monté sur véhicule et également avec ventilation au travers d'un canister à charbon actif;
- le réservoir subit 1 000 000 de cycles dont les caractéristiques sont :
- fréquence de 12 cycles par minute, sans interruption;
- oscillations de + 15 ° à - 15 ° par rapport à l'horizontale;
- température de 40 ± 2 °C;
- stockage pendant 8 semaines à 40 ± 2 °C;
- mesure de la perméabilité selon la procédure CARB.

## Revendications

1. Procédé pour la fabrication d'un article imperméable aux carburants comprenant une étape de traitement superficiel d'au moins une partie de l'article en l'absence substantielle d'oxygène, caractérisé en ce que la couche de surface de l'article devant être traitée est constituée d'un matériau qui comprend au moins une polyoléfine et qui comprend moins de 5 mg d'oxygène par kg, indépendamment de l'oxygène éventuellement contenu dans les éventuels additifs incorporés à ce matériau.

2. Procédé selon la revendication 1, dans lequel l'article est un corps creux.

3. Procédé selon la revendication 2, dans lequel le corps creux est un réservoir à carburant.

4. Procédé selon l'une des revendications précédentes, dans lequel la polyoléfine est du polyéthylène de haute densité.

5. Procédé selon l'une des revendications précédentes, dans lequel le traitement superficiel est un traitement de fluoration.

6. Procédé selon l'une des revendications 1 à 5, selon lequel le matériau constituant la couche de surface est constitué essentiellement de polyoléfine.

7. Procédé selon l'une des revendications précédentes, comprenant en outre une étape préalable de mise en oeuvre de l'article.

8. Procédé selon la revendication 7, dans lequel l'étape préalable de mise en oeuvre consiste en une étape d'extrusion-soufflage.

9. Procédé selon la revendication 7 ou 8, dans lequel l'étape de mise en oeuvre est réalisée en l'absence substantielle d'oxygène.

10. Procédé selon l'une des revendications 7 à 9, comprenant en outre une étape de conditionnement du matériau comprenant la polyoléfine avant sa mise en oeuvre et le traitement superficiel de l'article.

11. Utilisation d'un matériau comprenant au moins une polyoléfine et comprenant moins de 5 mg d'oxygène par kg, indépendamment de l'oxygène éventuellement contenu dans les éventuels additifs incorporés à ce matériau, pour la fabrication d'un article dont au moins une partie de la couche de surface est destinée à être traitée en l'absence substantielle d'oxygène.

12. Article dont au moins une partie est destinée à être traitée superficiellement en l'absence substantielle d'oxygène, caractérisé en ce que la couche de surface devant être traitée est constituée d'un matériau qui comprend au moins une polyoléfine et comprend moins de 5 mg d'oxygène par kg, indépendamment de l'oxygène éventuellement contenu dans les éventuels additifs incorporés à ce matériau.

13. Réservoir à carburant essentiellement constitué de polyéthylène de haute densité ayant subi un traitement superficiel de fluoration et dont la perméabilité après "slosh test" ne dépasse pas 0,2 gramme CARB, caractérisé en ce qu'il a été obtenu par fluoration d'un matériau, comprenant du polyéthylène, qui contenait moins de 5 mg d'oxygène par kg, indépendamment de l'oxygène éventuellement contenu dans les éventuels additifs incorporés à ce matériau.

## Claims

1. Process for the manufacture of an article, comprising a surface treatment step of at least part of the article in the substantial absence of oxygen, characterized in that the surface layer of the article which is to be treated consists of a material which comprises at least one polyolefin and which contains less than 5 mg of oxygen per kg, independently of the oxygen which may be contained in the optional additives incorporated into this material.

2. Process according to Claim 1, in which the article is a hollow body.

3. Process according to Claim 2, in which the hollow body is a fuel tank.

4. Process according to any one of the preceding claims, in which the polyolefin is high-density polyethylene.

5. Process according to any one of the preceding claims, in which the surface treatment is a fluorination treatment.

6. Process according to one of Claims 1 to 5, according to which the material constituting the surface layer consists essentially of polyolefin.

7. Process according to any one of the preceding claims, additionally comprising a prior step of processing of the article.

8. Process according to Claim 7, in which the prior processing step consists of an extrusion blow-moulding step.

9. Process according to Claim 7 or 8, in which the processing step is performed in the substantial absence of oxygen.

10. Process according to one of Claims 7 to 9, additionally comprising a step of conditioning of the material comprising the polyolefin before its processing and the surface treatment of the article.

11. Use of a material comprising at least one polyolefin and containing less than 5 mg of oxygen per kg, independently of the oxygen which may be contained in the optional additives incorporated into this material, for the manufacture of an article at least part of the surface layer of which is intended to be treated in the substantial absence of oxygen.

12. Article at least part of which is intended to be surface treated in the substantial absence of oxygen, characterized in that the surface layer which is to be treated consists of a material which comprises at least one polyolefin and contains less than 5 mg of oxygen per kg, independently of the oxygen which may be contained in the optional additives incorporated into this material.

13. Fuel tank consisting essentially of high density polyethylene which has undergone a surface fluorination treatment, characterized in that its permeability after a "slosh test" does not exceed 0.2 gram CARB.

## Patentansprüche

1. Verfahren zur Herstellung eines für Brennstoffe undurchlässigen Gegenstands, das einen Schritt zur Oberflächenbehandlung von wenigstens einem Teil des Gegenstands in wesentlicher Abwesenheit von Sauerstoff umfasst, dadurch gekennzeichnet, dass die zu behandelnde Oberflächenschicht des Gegenstands aus einem Material besteht, das wenigstens ein Polyolefin umfasst und das, unabhängig von dem Sauerstoff, der gegebenenfalls in den etwaigen Zusatzstoffen, die diesem Material zugesetzt sind, enthalten ist, weniger als 5 mg Sauerstoff pro kg umfasst.

2. Verfahren gemäß Anspruch 1, bei dem der Gegenstand ein Hohlkörper ist.

3. Verfahren gemäß Anspruch 2, bei dem der Hohlkörper ein Brennstoffbehälter ist.

4. Verfahren gemäß einem der vorhergehenden Ansprüche, bei dem das Polyolefin Polyethylen hoher Dichte ist.

5. Verfahren gemäß einem der vorhergehenden Ansprüche, bei dem die Oberflächenbehandlung eine Fluorierungsbehandlung ist.

6. Verfahren gemäß einem der Ansprüche 1 bis 5, gemäß dem das Material, das die Oberflächenschicht bildet, im Wesentlichen aus Polyolefin besteht.

7. Verfahren gemäß einem der vorhergehenden Ansprüche, das außerdem einen vorhergehenden Schritt zur Verarbeitung des Gegenstands umfasst.

8. Verfahren gemäß Anspruch 7, bei dem der vorhergehende Verarbeitungsschritt aus einem Blasextrusionsschritt besteht.

9. Verfahren gemäß Anspruch 7 oder 8, bei dem der Verarbeitungsschritt in wesentlicher Abwesenheit von Sauerstoff durchgeführt wird.

10. Verfahren gemäß einem der Ansprüche 7 bis 9, das außerdem einen Schritt zur Konditionierung des Materials, das das Polyolefin umfasst, vor seiner Verarbeitung und der Oberflächenbehandlung des Gegenstands umfasst.

11. Verwendung eines Materials, das wenigstens ein Polyolefin umfasst und, unabhängig von dem Sauerstoff, der gegebenenfalls in den etwaigen Zusatzstoffen, die diesem Material zugesetzt sind, enthalten ist, weniger als 5 mg Sauerstoff pro kg umfasst, zur Herstellung eines Gegenstands, bei dem wenigstens ein Teil der Oberflächenschicht dazu bestimmt ist, in wesentlicher Abwesenheit von Sauerstoff behandelt zu werden.

12. Gegenstand, bei dem wenigstens ein Teil dazu bestimmt ist, in wesentlicher Abwesenheit von Sauerstoff oberflächenbehandelt zu werden, dadurch gekennzeichnet, dass die zu behandelnde Oberflächenschicht aus einem Material besteht, das wenigstens ein Polyolefin umfasst und, unabhängig von dem Sauerstoff, der gegebenenfalls in den etwaigen Zusatzstoffen, die diesem Material zugesetzt sind, enthalten ist, weniger als 5 mg Sauerstoff pro kg umfasst.

13. Brennstoffbehälter, der im Wesentlichen aus Polyethylen hoher Dichte besteht, der einer Fluorierungs-Oberflächenbehandlung unterworfen wurde und bei dem die Durchlässigkeit nach "Slosh-Test" 0,2 gramm CARB nicht übersteigt, dadurch gekennzeichnet, dass er durch Fluorierung eines Polyethylen umfassenden Materials, das, unabhängig von dem Sauerstoff, der gegebenenfalls in den etwaigen Zusatzstoffen, die diesem Material zugesetzt sind, enthaltenen ist, weniger als 5 mg Sauerstoff pro kg enthielt, erhalten wurde.
